(19) Europäisches Patentamt
European Patent Office
Office européen des brevets

(11) **EP 1 655 569 B1**

(12) **EUROPÄISCHE PATENTSCHRIFT**

(45) Veröffentlichungstag und Bekanntmachung des Hinweises auf die Patenterteilung:
**19.08.2009 Patentblatt 2009/34**

(51) Int Cl.:
***G01B 7/06*** *(2006.01)*     ***B21B 38/04*** *(2006.01)*
***G01R 27/14*** *(2006.01)*

(21) Anmeldenummer: **05292009.7**

(22) Anmeldetag: **26.09.2005**

(54) **Verfahren zur Ermittlung der Wanddicke eines Metallrohres**

Procedure for determining the wall thickness of a metal pipe

Procédé de détermination de l'épaisseur de la paroi d'un tuyau en métal

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **03.11.2004 DE 102004053021**

(43) Veröffentlichungstag der Anmeldung:
**10.05.2006 Patentblatt 2006/19**

(73) Patentinhaber: **Nexans**
**75008 Paris (FR)**

(72) Erfinder:
• **Porcher, Klaus**
**31275 Lehrte (DE)**
• **Frohne, Christian**
**30657 Hannover (DE)**

(74) Vertreter: **Döring, Roger et al**
**Patentanwalt**
**Weidenkamp 2**
**30855 Langenhagen (DE)**

(56) Entgegenhaltungen:
DE-A1- 10 151 827     US-A- 3 721 897
US-A- 4 398 145

EP 1 655 569 B1

**Beschreibung**

Die Erfindung betrifft ein Verfahren zur Ermittlung der Wanddicke eines Metallrohres nach dem Oberbegriff des Patentanspruchs.

Aus der DE 35 42 681 A1 ist ein Verfahren zur Herstellung gezogener Qualitätsrohre bekannt, bei welchem ein Metallband zu einem Rohr mit Längsschlitz geformt, und der Längsschlitz verschweißt wird. Das geschweißte Metallrohr wird in einem letzten Arbeitsschritt in einer kontinuierlich arbeitenden Rohrziehvorrichtung mit einem Ziehring und einem fliegenden Dorn in seinem Außendurchmesser und seiner Wanddicke reduziert.

Beim Einrichten der Rohrzieheinrichtung, insbesondere bei der Auswahl der Ziehwerkzeuge (Dorn, Matrize) muß die Wanddicke des reduzierten Metallrohres vermessen werden, bevor die Produktion beginnen kann. In manchen Fällen kann der Produktionsbeginn dadurch über einen längeren Zeitraum verzögert werden.

Bei der kontinuierlichen Herstellung von Metallrohren mit einem Außendurchmesser von weniger als 5 mm und einer Wanddicke von weniger als 0,1 mm wird die Wanddicke bislang auf optischem Wege gemessen. Dabei wird ein kurzes Stück des fertigen Rohres in Gießharz eingebettet, und nach dem Aushärten des Gießharzes ein Schliff der Oberfläche erstellt, der dann unter einem Mikroskop betrachtet werden kann. Von dem Querschliff wird ein Foto erstellt und das Rohr vermessen.

Bei den hier in Rede stehenden extrem dünnen Metallrohren ist ein Mikroskop hoher Genauigkeit und mit Kameraanschluß sowie eine entsprechende Meßsoftware erforderlich. Diese Apparatur ist sehr kostspielig und der Vorgang ist sehr zeitaufwendig und kann mehrere Stunden dauern. Während dieser Zeit kann die Produktion nicht angefahren werden.

Die Ermittlung der Wanddicke von rohrartigen Gebilden durch Messung des Spannungsabfalls bzw. des Widerstandes ist aus der US 3 721 897 A bzw. US 4 398 145 A bekannt.

Der vorliegenden Erfindung liegt die Aufgabe zugrunde, ein Verfahren zur Ermittlung der Wanddicke von längsnahtgeschweißten Metallrohren anzugeben, bei dem das Meßergebnis in wesentlich kürzerer Zeit vorliegt und welches an der Produktionsanlage durchgeführt werden kann. Das Meßergebnis soll reproduzierbar mit einer maximalen Abweichung von 1 % vorliegen.

Diese Aufgabe wird entsprechend den kennzeichnenden Merkmalen des Patentanspruchs gelöst.

Der wesentliche Vorteil der Erfindung ist darin zu sehen, daß bei der Verwendung eines Referenzrohres, dessen Außendurchmesser dem Außendurchmesser des zu fertigenden Metallrohrs entspricht, dessen Wanddicke aber größer ist als die Wanddicke des zu fertigenden Metallrohrs, die Genauigkeit des Meßverfahrens erhöht werden kann, da beide Rohre die gleiche Temperatur und einen gleichen spezifischen Widerstand aufweisen. Der Widerstand des Metallrohres mit geringerer Wanddicke (Fertigrohr) verhält sich zu dem Widerstand des Referenzrohres umgekehrt proportional zu der Wandstärke. Da der Außendurchmesser von Fertigrohr und Referenzrohr gleich ist, läßt sich die Wanddicke sehr schnell ermitteln und falls erforderlich durch Einsatz eines neuen Dornes bzw. durch Nachbearbeitung des Domes korrigieren.

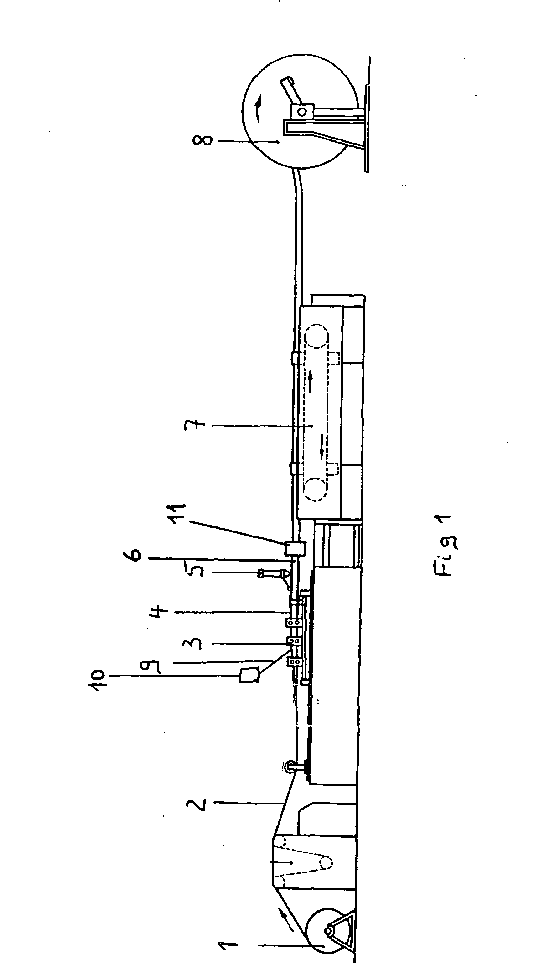

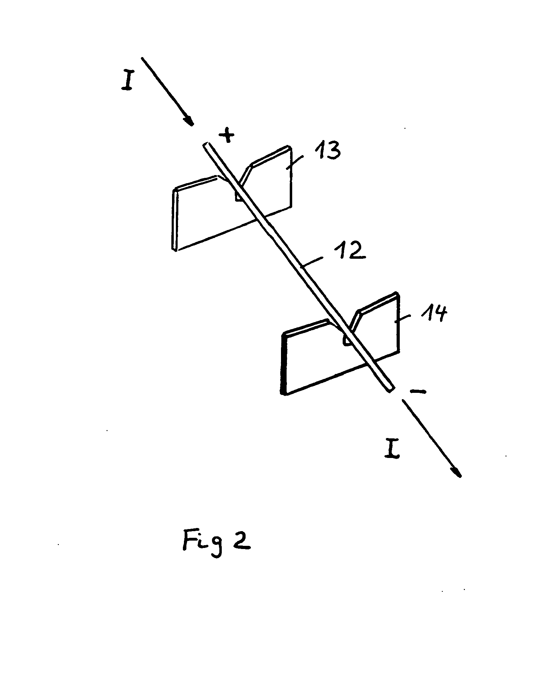

Die Erfindung ist anhand der in den Figuren 1 und 2 schematisch dargestellten Ausführungsbeispiele näher erläutert.

In der Figur 1 ist eine seitliche Ansicht einer Vorrichtung zur kontinuierlichen Herstellung längsnahtgeschweißter Metallrohre dargestellt, wie sie beispielsweise aus der DE 101 51 827 A1 bekannt ist.

Von einer Vorratsspule 1 wird ein Metallband 2, beispielsweise aus austenitischem Stahl, abgezogen und einem Formrollensatz 3 zugeführt, in welchem das Metallband 2 allmählich zu einem Rohr 4 mit Längsschlitz geformt wird. Der Längsschlitz wird mit einer Schweißeinrichtung 5, vorzugsweise einer Laserschweißeinrichtung, geschlossen. Das geschweißte Rohr 6 wird hinter der Schweißeinrichtung 5 von einem Spannzangenabzug 7 gefaßt, der das Metallband 2, das Rohr 4 sowie das geschweißte Rohr 6 durch die Fertigungsanlage zieht. Der Spannzangenabzug ist aus der deutschen Auslegeschrift 11 64 355 bekannt.

Das geschweißte Rohr 6 wird anschließend auf eine Kabeltrommel 8 aufgewickelt.

Das beschriebene Verfahren ist begrenzt auf Rohre mit einem Außendurchmesser von mindestens 2 mm.

Es besteht Bedarf an Metallrohren mit einem Außendurchmesser von weniger als 2 mm und einer Wanddicke von weniger als 0,1 mm. Solche Metallrohre finden Verwendung bei der Herstellung von Injektionsnadeln.

Um Metallrohre mit diesen Abmessungen herstellen zu können, müssen die nach dem beschriebenen Verfahren hergestellten längsnahtgeschweißten Rohre durch Ziehen in mindestens einem Schritt auf die gewünschte Abmessung reduziert werden.

Um die längsnahtgeschweißten Rohre für die nachfolgenden Ziehoperationen geeignet zu machen, ist es notwendig, das geschweißte Rohr 6 mit einem Schmiermittelfilm an seiner inneren Oberfläche zu versehen.

Hierzu wird mittels einer Lanze 9 ein Schmiermittel aus einem Vorratsbehälter 10 in das Rohr 4 bzw. das geschweißte Rohr 6 eingebracht.

Mit 11 ist eine Ziehmatrize bezeichnet, mittels der der Außendurchmesser des geschweißten Rohres 6 verringert werden kann. Wenn sich in dem geschweißten Rohr 6 ein nicht dargestellter Dorn befindet, beispielsweise ein sogenannter fliegender Dorn, kann gleichzeitig die Wanddicke des geschweißten Rohres 6 verringert werden.

Sollen mit der dargestellten Vorrichtung mehrere Ziehoperationen durchgeführt werden, sind entweder mehrere Ziehmatrizen 11 und Abzugsvorrichtungen 7 hintereinander anzuordnen oder die mit dem geschweißten Rohr 6 gefüllte Kabeltrommel 8 wird an die Stelle der Vorratsspule 1 transportiert. In diesem Fall bleiben der Formrollensatz 3 und die Schweißeinrichtung 5 außer Funktion.

Anhand der Figur 2 wird das Verfahren nach der Erfindung näher erläutert:

Um die Wanddicke eines Metallrohrs 12 zu bestimmen, wird zunächst ein Referenzrohr bereitgestellt und in Klemmvorrichtungen 13 und 14 eingespannt. Der Außendurchmesser des Referenzrohrs entspricht dem Außendurchmesser des Metallrohrs 12 und seine Wanddicke $S_1$ entspricht der Wanddicke des Metallrohrs 12 vor dem Reduzieren. Die Klemmvorrichtungen 13 und 14 bestehen aus einem elektrisch leitfähigen Werkstoff, z. B. Stahl und sind einem Schneidkontakt ähnlich aufgebaut. Sie sind in einem definierten Abstand zueinander auf einer nicht näher bezeichneten Unterlage aus einem elektrisch isolierenden Material befestigt. Die Länge des Referenzrohres ist größer als der Abstand der Klemmvorrichtungen 13 und 14 voneinander. Die Enden des Referenzrohres werden mit einer Stromquelle verbunden, so daß das Referenzrohr von einem Strom durchflossen wird. Der Spannungsabfall $U_1$ über das Referenzrohr wird an den Klemmvorrichtungen 13 und 14 abgegriffen und gemessen.

Anschließend wird das Metallrohr 12 in die Klemmvorrichtungen 13 und 14 eingespannt. Die Länge des Metallrohrs 12 ist größer als der Abstand der Klemmvorrichtungen 13 und 14 voneinander. Die Enden des Metallrohres 12 werden mit der Stromquelle verbunden, so daß das Metallrohr 12 von einem Strom durchflossen wird. Der Spannungsabfall $U_2$ über das Metallrohr 12 wird an den Klemmvorrichtungen 13 und 14 abgegriffen und gemessen. Dabei wird der Übergangswiderstand zwischen dem Metallrohr 12 und den Klemmvorrichtungen 13 und 14 nicht als Meßfehler gemessen.

Der über dem Metallrohr 12 gemessene Spannungsabfall $U_2$ bzw. Widerstandswert welches mit einem Dorn gezogen wurde, d. h. dessen Wanddicke $S_2$ reduziert wurde, verhält sich umgekehrt proportional zu der Wanddicke $S_1$ des Referenzrohrs, so daß die Wanddicke $S_2$ des Metallrohrs 12 schnell und mit hoher Genauigkeit entsprechend der Gleichung $S_2 = S_1 \times \dfrac{U_1}{U_2}$ ermittelt werden kann.

## Patentansprüche

1. Verfahren zur Ermittlung der Wanddicke eines Metallrohres welches durch ein kontinuierliches Verfahren hergestellt wird, bei dem ein Metallband von einem Bandvorrat abgezogen, allmählich zu einem Schlitzrohr geformt und die Längsnaht durch Schweißen geschlossen wird, und bei dem sowohl der Außendurchmesser als auch die Wanddicke des geschweißten Rohres im selben Arbeitsgang reduziert werden, **gekennzeichnet durch** folgende Merkmale:

a) Bereitstellen eines Referenzrohrs, dessen Außendurchmesser $D_1$ dem Außendurchmesser $D_2$ des Metallrohrs (12) nach dem Reduzieren des Außendurchmessers und dessen Wanddicke $S_1$ der Wanddicke des Metallrohrs (12) vor dem Reduzieren entsprechen;
b) Anordnen von zwei Klemmvorrichtungen (13,14) an dem Referenzrohr in genau definiertem Abstand zueinander;
c) Verbinden der Enden des Referenzrohres mit einer Stromquelle,
d) Messen des Spannungsabfalls $U_1$ an dem Referenzrohr zwischen den Klemmvorrichtungen (13,14);
e) Bereitstellen des Metallrohrs (12), dessen Außendurchmesser $D_2$ dem Außendurchmesser $D_1$ des Referenzrohrs entspricht, dessen Wanddicke $S_2$ jedoch reduziert ist;
f) Messen des Spannungsabfalls $U_2$ an dem Metallrohr (12) nach e), mit den Schritten b, c und d und
g) Ermitteln der Wanddicke $S_2$ des Metallrohrs (12) nach e) nach der Gleichung

$$S_2 = S_1 \times \frac{U_1}{U_2}.$$

## Claims

1. Method for determining the wall thickness of a metal tube, which is produced in a continuous process, wherein a metallic ribbon is with drawn from a ribbon supply, formed into a slotted tube and welded with a longitudinal seam, and wherein the outer diameter as well as the wall thickness of the welded tube are reduced during the same working step, **characterized by** the following features:

a) preparing of a reference tube with an outer diameter $D_1$ which corresponds to the outer diameter $D_2$ of the metal tube (12) after reduction of the outer diameter and a wall thickness $S_1$ which corresponds to the wall thickness of the metal tube (12) before its reduction;
b) arranging of two clamp contacts (13,14) on the reference tube with an exactly defined distance of separation;
c) connecting the ends of the reference tube to a power source ;
d) measuring the voltage drop $U_1$ in the refer-

ence tube between the clamp co nta c ts (13,14);

e) preparing the metal tube (12), the outer diameter $D_2$ of which corresponds to the outer diameter $D_1$ of the reference tube, the wall thickness of which however is not reduced;

f) measuring the voltage drop $U_2$ in the metal tube (12) according to e), with the stepsb, c and d and

g) determining the wall thickness $S_2$ of the metal tube (12) according to e) with the equation

$$S_2 = S_1 \text{ x } \frac{U_1}{U_2}.$$

**Revendications**

1. Procédé de détermination de l'épaisseur de la paroi d'un tuyau en métal, qui est fabriqué par un procédé continu, dans lequel une bande de métal est tirée d'une réserve de bande, est progressivement façonnée pour donner un tuyau fendu, et le cordon longitudinal est fermé par soudage, et dans lequel le diamètre extérieur ainsi que l'épaisseur de paroi du tube soudé sont réduits dans la même passe de travail, **caractérisé par** les caractéristiques suivantes :

    a) fourniture d'un tuyau de référence, dont le diamètre extérieur $D_1$ correspond au diamètre extérieur $D_2$ du tuyau métallique (12) après la réduction de son diamètre extérieur et dont l'épaisseur de paroi $S_1$ correspond à l'épaisseur de paroi du tuyau métallique (12) avant la réduction ;
    b) disposition de deux dispositifs de serrage (13, 14) sur le tuyau de référence à une distance définie précisément l'un de l'autre ;
    c) connexion des extrémités du tuyau de référence à une source de courant,
    d) mesure de la chute de tension $U_1$ au niveau du tuyau de référence entre les dispositifs de serrage (13, 14) ;
    e) fourniture du tuyau métallique (12), dont le diamètre extérieur $D_2$ correspond au diamètre extérieur $D_1$ du tuyau de référence, et dont l'épaisseur de paroi $S_2$ est toutefois réduite ;
    f) mesure de la chute de tension $U_2$ au niveau du tuyau métallique (12) après l'étape e), avec les étapes b, c et d, et
    g) détermination de l'épaisseur de paroi $S_2$ du tuyau métallique (12) selon e), selon l'équation :
    $S_2 = S_1 \text{ x } (U_1/U_2)$.

Fig 1

Fig 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3542681 A1
- US 3721897 A
- US 4398145 A
- DE 10151827 A1